# EUROPÄISCHE PATENTSCHRIFT

(11) **EP 2 534 014 B1**
(45) Veröffentlichungstag und Bekanntmachung des Hinweises auf die Patenterteilung: **11.06.2014**
(21) Anmeldenummer: 11705440.3
(22) Anmeldetag: 10.02.2011
(51) Int. Cl.: B60R 21/04

(54) **FAHRZEUGINNENAUSSTATTUNGSTEIL UND VERFAHREN ZU DESSEN HERSTELLUNG**
INTERIOR COMPONENT FOR A VEHICLE AND METHOD FOR MANUFACTURING THEREOF
ÉLÉMENT D'ÉQUIPEMENT D'INTÉRIEUR DE VÉHICULE ET & xA;PROCÉDÉ DE FABRICATION D'UN TEL ÉLÉMENT

(30) Priorität: 10.02.2010 DE 102010007661
(43) Veröffentlichungstag der Anmeldung: 19.12.2012
(73) Patentinhaber: Johnson Controls GmbH, 51399 Burscheid (DE)
(72) Erfinder: WOLFF, Martin, 45529 Hattingen (DE); SCHIDAN, Alexander, 42719 Solingen (DE); MEYER, Thorsten, 47804 Krefeld (DE); HUBE, Oliver, 38302 Wolfenbüttel (DE); KALUS, Holger, 47228 Duisburg (DE); ZIMMERMANN, Detlef, 51515 Kürten (DE)
(74) Vertreter: Trinks, Ole
(86) Internationale Anmeldenummer: PCT/EP2011/000622
(87) Internationale Veröffentlichungsnummer: WO 2011/107212

(56) Entgegenhaltungen:
- EP-A1- 0 863 056
- DE-A1-102007 017 090
- US-A1- 2009 256 391

## Beschreibung

Die vorliegende Erfindung betrifft ein Fahrzeuginnenausstattungsteil mit einem Trägerelement und einem Energieabsorptionselement und ein Verfahren zu dessen Herstellung.

Solche Fahrzeuginnenausstattungsteile sind insbesondere für die Fahrzeuginnenverkleidung allgemein bekannt. Beispielsweise ist aus der deutschen Offenlegungsschrift DE 10 2004 034 124 A1 ein Verstärkungsteil für einen Aufprallschutz eines Seitenbereichs eines Kraftfahrzeuges bekannt, wobei das Verstärkungsteil ein Fachwerk aus miteinander verbundenen Stegen aufweist. Die Stege sind hierbei aus Kunststoff gefertigt und wabenförmig gestaltet. Nachteilig bei dem Stand der Technik ist, dass bei der Fertigung der wabenförmigen Struktur zusammen mit dem Fahrzeuginnenausstattungsteil nicht verhindert werden kann, dass die wabenförmige Struktur auf der Vorderseite (d. h. der wabenförmigen Struktur abgewandten Seite des Fahrzeuginnenausstattungsteils) zumindest andeutungsweise sichtbar ist. Darüber hinaus ist dieses Fahrzeuginnenausstattungsteil sehr aufwendig zu fertigen, sehr schwer und vergleichsweise kostenintensiv. Ein Fahrzeuginnenausstattungsteil nach dem Oberbegriff von Anspruch 1 ist aus dem Dokument DE 10 2007 017 090 A1 bekannt.

Es ist eine Aufgabe der vorliegenden Erfindung, ein Fahrzeuginnenausstattungsteil, insbesondere für ein Kraftfahrzeug, zu schaffen, das eine hohe Sicherheit im Fall eines Unfalls mit einer einfachen und kostengünstigen Herstellbarkeit kombiniert und darüber hinaus gewichtssparend und einfach herstellbar ist.

Die Aufgabe wird gelöst durch ein Fahrzeuginnenausstattungsteil, insbesondere für ein Kraftfahrzeug, mit einem Trägerelement und einem Absorptionselement, wobei das Trägerelement und das Absorptionselement aus dem gleichen Material hergestellt sind. Hierdurch ist es erfindungsgemäß besonders kostengünstig möglich, ein Bauteil zur Erfüllung einer Vielzahl von unterschiedlichen Funktionen bereitzustellen, wobei zur Realisierung dieser unterschiedlichen Funktionen insbesondere eine Vormontage vorgesehen ist, um einen Einbau des Fahrzeuginnenausstattungsteils in ein Kraftfahrzeug bzw. in eine Kraftfahrzeugkomponente vorzunehmen.

Die vorliegende Erfindung betrifft ein Fahrzeuginnenausstattungsteil, insbesondere die Verkleidung der Karosserie des Fahrzeuges und/oder ein Armaturenbrett. Bevorzugt handelt es sich bei dem Fahrzeuginnenausstattungsteil um eine Türverkleidung. Erfindungsgemäß weist dieses Fahrzeuginnenausstattungsteil ein Trägerelement auf, das beispielsweise mit der Karosserie, insbesondere mit dem Türrohbau verbunden ist. An diesem Trägerelement ist ein Energieabsorptionselement angeordnet, das Energie im Falle eines Unfalls aufnimmt und dadurch die Unfallfolgen für den Fahrzeuginsassen mindert.

Erfindungsgemäß sind das Trägerelement und das Energieabsorptionselement aus demselben Material gefertigt. Vorzugsweise handelt es sich bei dem Material um ein sogenanntes NF-Material, welches eine Mischung aus einem thermoplastischen Material und einem Fasermaterial ist, besonders bevorzugt Fasern natürlichen Ursprungs. Insbesondere handelt es sich bei dem NF-Material um ein Material umfassend einen thermoplatischen Kunststoff, insbesondere Polypropylen und Fasermaterial, wobei der Thermoplastanteil beispielsweise bei 40 -60% liegt. Als Fasermaterial kommt beispielsweise emeuerbares natürliches Fasermaterial in Frage wie etwa aus Kenaf, Flachs, Hanf oder dergleichen.

Vorzugsweise werden das Trägerelement und das Energieabsorptionselement unter Druck und/oder Temperatur aus einem flächigen, insbesondere bahnartigen oder plattenartigen, Material geformt und anschließend vereinzelt, beispielsweise ausgeschnitten oder ausgestanzt.

Das Trägerelement und das Energieabsorptionselement sind so gestaltet und/oder so auf dem Ausgangsmaterial angeordnet, dass das Energieabsorptionselement aus Bereichen der Materialbahn oder -platte gefertigt wird, die ansonsten als Verschnitt anfallen würden. Dadurch wird der Materialeinsatz reduziert.

Gemäß einem weiteren erfindungsgemäßen oder bevorzugten Gegenstand der vorliegenden Erfindung ist das Energieabsorptionselement einstückig vorgesehen und erstreckt sich über mehrere Ebenen. Insbesondere handelt es dabei um mehrere Ebenen zwischen dem Fahrzeuginsassen und der Fahrzeugkarosserie. Durch die unterschiedlichen Ebenen wird das Energieabsorptionselement nicht vollflächig deformiert, sondern die Deformation erfolgt Ebene für Ebene.

Vorzugsweise weist das Energieabsorptionselement eine Mehrzahl von Einbuchtungen auf, die zumindest teilweise unterschiedlich Tief gestaltet sind, d.h. vorzugsweise ist die Ausdehnung der Einbuchtungen zwischen dem Fahrzeuginsassen und der Fahrzeugkarosserie unterschiedlich. Vorzugsweise unterscheidet sich die Querschnittsform der Einbuchtungen.

Vorzugsweise weist das Energieabsorptionselement zumindest eine, vorzugsweise zwei Symmetrieebenen auf, die vorzugsweise senkrecht aufeinander stehen. Die Symmetrieebenen erstrecken sich vorzugsweise in X- und/oder in Z-Richtung.

Vorzugsweise wird das Energieabsorptionselement in einer Ausnehmung des Trägerelementes angeordnet und besonders bevorzugt mit dem Trägerelement formschlüssig verbunden.

Vorzugsweise wird an dem Trägerelement ein Dekormaterial vorgesehen, wobei das Dekormaterial besonders bevorzugt beim Formen mit dem Trägermaterial, insbesondere stoffschlüssig, verbunden wird. Besonders bevorzugt ist es erfindungsgemäß, wenn das Trägerelement in einem Teilbereich seiner Oberfläche ein einstückig verbundenes Dekormaterial aufweist. Hierdurch kann das Dekormaterial auf einem Teilbereich des Trägerelements ohne einen weiteren Verbindungsschritt aufgebracht werden.

Vorzugsweise befindet sich in dem Energieabsorptionselement ein Staufach. Vorzugsweise wird eine der Einbuchtungen als Staufach vorgesehen, das besonders bevorzugt mit einem Deckel abgedeckt ist.

Ein weiterer Gegenstand der vorliegenden Erfindung betriff ein Verfahren zur Herstellung des erfindungsgemäßen Fahrzeuginnenausstattungsteils, wobei das Trägerelement und das Energieabsorptionselement in einem Verfahrensschritt geformt werden. Beispielsweise werden bei einem Prägevorgang sowohl das Trägerelement als auch das Energieabsorptionselement aus einer Materialbahn oder -platte geformt und/oder die Elemente werden gleichzeitig ausgestanzt.

Hierdurch können in besonderer Weise Kosten bei der Herstellung des Fahrzeuginnenausstattungsteils eingespart werden und dennoch ein Fahrzeuginnenausstattungsteil mit einer Vielzahl von Funktionalitäten bereitgestellt werden. Ferner ist durch die Realisierung dieser Vielzahl von Funktionalitäten mittels eines Trägerelements und eines Absorptionselements aus dem gleichen Material und im gleichen Herstellungsschritt gewährteistet, dass kein unnötiger logistischer Aufwand, etwa durch eine Mehrzahl von Teilenummern oder dergleichen, betrieben werden muss, sondern die Kosten reduziert werden können. Für die Formgebung des Trägerelements und des Absorptionselements ist erfindungsgemäß insbesondere ein Pressvorgang in einem Presswerkzeug vorgesehen, wobei ein flächig erstrecktes Ausgangsmaterial dreidimensional verformt wird und vor, während oder nach dem Formgebungsschritt ein Stanzschritt vorgesehen ist.

Ausführungsbeispiele der Erfindung sind in den Zeichnungen dargestellt und in der nachfolgenden Beschreibung näher erläutert.
- **Figur 1**: zeigt ein erfindungsgemäßes Fahrzeuginnenausstattungsteil mit einem Trägerelement und einem Absorptionselement in einer Schnittdarstellung entlang einer Schnittlinie.
- **Figur 2**: zeigt einen Ausschnitt des erfindungsgemäßen Fahrzeuginnenausstattungsteils in einer Schnittdarstellung entlang einer weiteren Schnittlinie.
- **Figur 3**: zeigt das Absorptionselement in einer Draufsicht und in einer Schnittdarstellung.
- **Figuren 4 und 5**: zeigen das Absorptionselement in jeweils einer perspektivischen Darstellung.

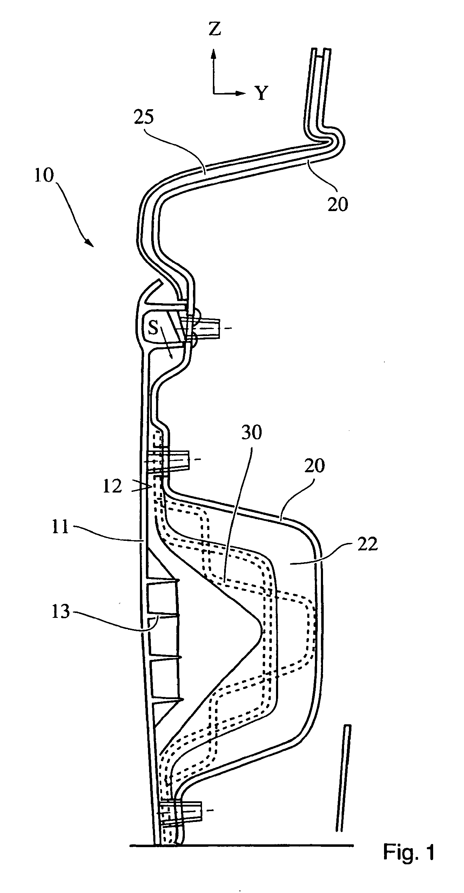

In den Figuren 1, 2 und 3 ist jeweils ein Fahrzeuginnenausstattungsteil 10 dargestellt, welches ein Trägerelement 20 und ein Absorptionselement 30 aufweist. Im dargestellten Beispiel weist das Fahrzeuginnenausstattungsteil 10 darüber hinaus ein Abdeck- und/oder Befestigungselement 11 auf. Das Absorptionselement 30 dient der Energieaufnahme im Falle eines Unfalls und damit dem Schutz der Fahrzeuginsassen. Das Trägerelement 20 weist im dargestellten Ausführungsbeispiel in einem Teilbereich eine Sichtseite und in diesem Bereich ein Dekormaterial 25 auf. Bevorzugt wird dieses Dekormaterial 25 im gleichen Verfahrensschritt einstückig (d.h. ohne ein weiteres Verbindungsmaterial wie zum Beispiel ein Kleber oder dergleichen) mit dem Material des Trägerelements 20 verbunden. Das Absorptionselement 30 wird erfindungsgemäß bevorzugt mit dem Trägerelement 20 geformt und ist ferner bevorzugt aus dem gleichen Material hergestellt, bevorzugt aus einem sogenannten NF-Material, welches eine Mischung aus einem thermoplastischen Material und einem Fasermaterial ist, besonders bevorzugt Fasern natürlichen Ursprungs. Insbesondere handelt es sich bei dem NF-Material um ein Material umfassend Polypropylen und Fasermaterial, wobei der Polypropylenanteil beispielsweise bei 50% liegt. Als Fasermaterial kommt beispielsweise emeuerbares natürliches Fasermaterial in Frage wie etwa aus Kenaf, Flachs, Hanf oder dergleichen.

Vorzugsweise wird das Absorptionselement 30 in eine Ausnehmung 22 des Trägerelements 20 platziert und anschließend mittels des Abdeck- und/oder Befestigungselements 11 mit diesem verbunden. Beispielsweise erfolgt die Verbindung über Befestigungsdome, die durch das Energieabsorptionselement 30 und das Trägerelement 20 gesteckt werden und besonders bevorzugt mit diesem verrasten. Das Abdeck- und/oder Befestigungselement 11 kann zusätzlich eine Zackenstruktur 12 aufweist, um die Befestigung des Trägerelements 20 und des Absorptionselements 30 zu erleichtern oder zu verbessern. Ferner kann das Abdeck- und/oder Befestigungselement 11 auch eine Versteifungsstruktur 13 aufweisen, etwa im Bereich des Absorptionselements 30.

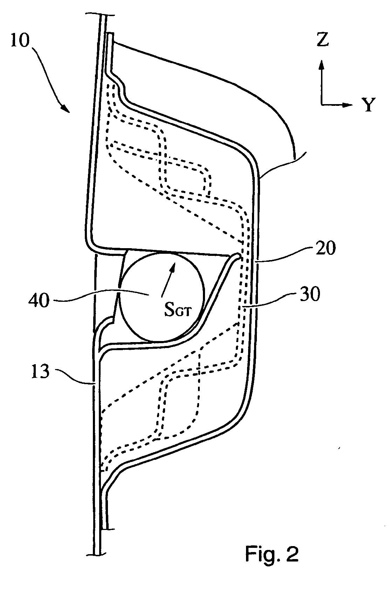

In Figur 2 ist ein Ausschnitt eines erfindungsgemäßen Fahrzeuginnenausstattungsteils 10 in einer Schnittdarstellung entlang einer weiteren Schnittlinie dargestellt, wobei wiederum das Abdeck- und/oder Befestigungselement 11, das Trägerelement 20 und das Absorptionselement 30 dargestellt sind. In der Darstellung gemäß Figur 2 ist ebenfalls eine (in einer Schnittdarstellung dargestellte) Wamweste 40 als Beispiel eines Gegenstands abgebildet, der in einem in das Fahrzeuginnenausstattungsteil integrierten Ablagefach untergebracht ist. In dem Abdeck- und/oder Befestigungselement 11 ist eine entsprechende, gegebenenfalls abdeckbare Öffnung vorgesehen, um Zugang zu dem Ablagefach zu haben.

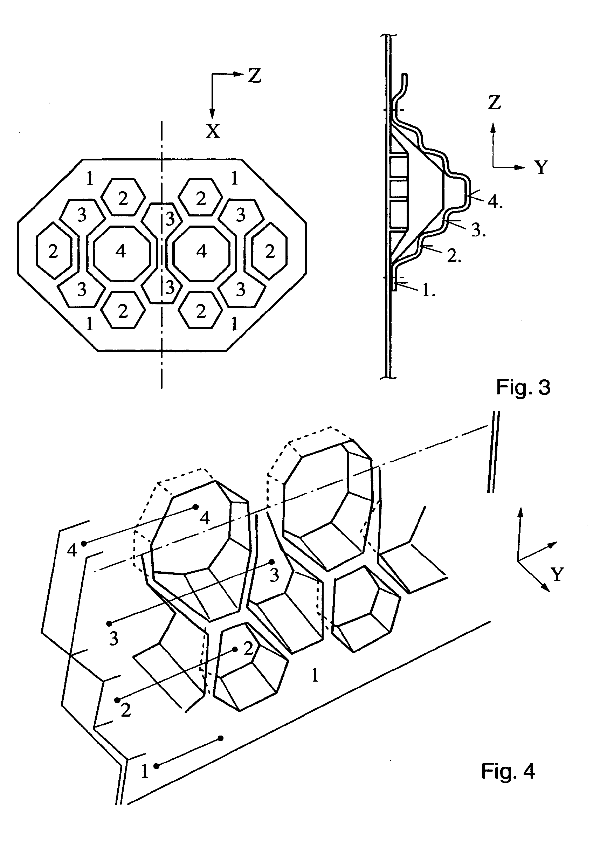

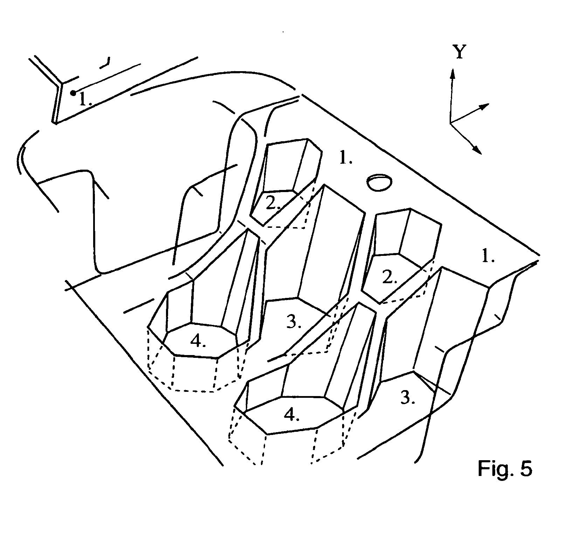

Figuren 3 bis 5 zeigen verschiedene Darstellungen des Absorptionselements 30. Figur 3 zeigt das Energieabsorptionselement 30 im linken Teil der Figur in einer Draufsicht und im rechten Teil der Figur in einer Schnittdarstellung. Die Figuren 4 und 5 zeigen das Energieabsorptionselement 30 in jeweils einer perspektivischen Darstellung. Aus allen Darstellungen der Figuren 3 bis 5 wird deutlich, dass das Energieabsorptionselement 30 verschiedene Ebenen aufweist, die mit den Bezugsziffern 1, 2, 3 und 4 bezeichnet sind und die sich von dem Fahrzeuginsassen in Richtung der Fahrzeugkarosserie erstrecken. Hieraus wird deutlich, dass das Energieabsorptionselement 30 aufgrund seiner tiefgezogenen bzw. gepressten Formgebung eine große Verformungsenergie aufnehmen kann. Das Energieabsorptionselement 30 weist eine Vielzahl von Einbuchtungen 1 - 4 auf, die zumindest teilweise einen unterschiedlichen Querschnitt aufweisen. Wie insbesondere Figur 3 entnommen werden kann, sind die Einbuchtungen 1 - 4 gemäß zweier Symmetrieebenen X, Z angeordnet.

### Bezugszeichenliste

- 1, 2, 3, 4: verschiedene Ebenen des Absorptionselements, Einbuchtungen
- 10: Fahrzeuginnenausstattungsteil
- 11: Abdeck-, Befestigungselement
- 12: Zackenstruktur
- 13: Versteifungsstruktur
- 20: Trägerelement
- 22: Ausnehmung
- 25: Dekormaterial
- 30: Energieabsorptionselement
- 40: Warnweste

## Patentansprüche

1. Fahrzeuginnenausstattungsteil (10) mit einem Trägerelement (20) und einem Energieabsorptionselement (30), wobei das Trägerelement (20) und das Energieabsorptionselement (30) aus demselben Material gefertigt sind, **dadurch gekennzeichnet, dass** das Energieabsorptionselement (30) aus Verschnitt des Trägerelementes (20) gefertigt ist.

2. Fahrzeuginnenausstattungsteil (10) nach Patentanspruch 1, **dadurch gekennzeichnet, dass** das Energieabsorptionselement (30) einstückig vorgesehen ist und sich über mehrere Ebenen (1 - 4) erstreckt.

3. Fahrzeuginnenausstattungsteil (30) nach Anspruch 2, **dadurch gekennzeichnet, dass** das Energieabsorptionselement eine Mehrzahl von Einbuchtungen (1 - 4), zumindest teilweise mit unterschiedlicher Tiefe, aufweist.

4. Fahrzeuginnenausstattungsteil (30) nach einem der Ansprüche 2 oder 3, **dadurch gekennzeichnet, dass** sich die Querschnittsform der Einbuchtungen unterscheidet.

5. Fahrzeuginnenausstattungsteil (10) nach einem der voranstehenden Ansprüche, **dadurch gekennzeichnet, dass** sich das Energieabsorptionselement (30) in einer Ausnehmung (22) des Trägerelementes (20) befindet.

6. Fahrzeuginnenausstattungsteil (10) nach einem der voranstehenden Ansprüche, **dadurch gekennzeichnet, dass** das Energieabsorptionselement (30) formschlüssig mit dem Trägerelement (20) verbunden ist.

7. Fahrzeuginnenausstattungsteil (10) nach einem der voranstehenden Ansprüche, **dadurch gekennzeichnet, dass** an dem Trägerelement (20) ein Dekormaterial (25) vorgesehen ist.

8. Fahrzeuginnenausstattungsteil (10) nach einem der voranstehenden Ansprüche, **dadurch gekennzeichnet, dass** sich in dem Energieabsorptionselement (30) ein Staufach befindet.

9. Verfahren zur Herstellung des Fahrzeuginnenausstattungsteils gemäß einem der voranstehenden Ansprüche, wobei das Trägerelement (20) und das Energieabsorptionselement (30) in einem Verfahrensschritt geformt werden, **dadurch gekennzeichnet, dass** das Trägerelement (20) und das Energieabsorptionselement (30) anschließend vereinzelt werden.

## Claims

1. A vehicle interior fitting (10) comprising a support element (20) and an energy absorption element (30), wherein the support element (20) and the energy absorption element (30) are made from the same material, **characterized in that** the energy absorption element (30) is made from offcuts of the support element (20).

2. The vehicle interior fitting (10) according to claim 1, **characterized in that** the energy absor-ption element (30) is provided as one piece and extends over a plurality of planes (1 - 4).

3. The vehicle interior fitting (30) according to claim 2, **characterized in that** the energy absorption element comprises a plurality of indentations (1 - 4) at least of partially differing depths.

4. The vehicle interior fitting (30) according to claim 2 or 3, **characterized in that** the cross-sectional shape of the indentations differs.

5. The vehicle interior fitting (10) according to any one of the preceding claims, **characterized in that** the energy absorption element (30) is situated in a recess (22) of the support element (20).

6. The vehicle interior fitting (10) according to any one of the preceding claims, **characterized in that** the energy absorption element (30) is positively connected to the support element (20).

7. The vehicle interior fitting (10) according to any one of the preceding claims, **characterized in that** a decorative material (25) is provided on the support element (20).

8. The vehicle interior fitting (10) according to any one of the preceding claims, **characterized in that** a storage compartment is situated in the energy absorption element (30).

9. A method for manufacturing the vehicle interior fitting according to any one of the preceding claims, wherein the support element (20) and the energy absorption element (30) are formed in one method step, **characterized in that** the support element (20) and the energy absorption element (30) are subsequently separated.

## Revendications

1. Élément d'équipement intérieur (10) pour un véhicule, comprenant un élément porteur (20) et un élément d'absorption d'énergie (30), dans lequel l'élément porteur (20) et l'élément d'absorption d'énergie (30) sont fabriqués à partir du même matériau,
**caractérisé en ce que** l'élément d'absorption d'énergie (30) est fabriqué à partir de chutes de l'élément porteur (20).

2. Élément d'équipement intérieur (10) selon la revendication 1, **caractérisé en ce que** l'élément d'absorption d'énergie (30) est prévu d'une seule pièce, et s'étend sur plusieurs plans (1-4).

3. Élément d'équipement intérieur (30) selon la revendication 2, **caractérisé en ce que** l'élément d'absorption d'énergie comprend une pluralité de creux (1-4), au moins partiellement avec des profondeurs différentes.

4. Élément d'équipement intérieur (30) selon l'une des revendications 2 ou 3, **caractérisé en ce que** la forme de section transversale des creux est différente.

5. Élément d'équipement intérieur (10) selon l'une des revendications précédentes, **caractérisé en ce que** l'élément d'absorption d'énergie (30) se trouve dans un évidement (22) de l'élément porteur (20).

6. Élément d'équipement intérieur (10) selon l'une des revendications précédentes, **caractérisé en ce que** l'élément d'absorption d'énergie (30) est relié avec l'élément porteur (20) en coopération de formes.

7. Élément d'équipement intérieur (10) selon l'une des revendications précédentes, **caractérisé en ce qu'**un matériau de décoration (25) est prévu sur l'élément porteur (20).

8. Élément d'équipement intérieur (10) selon l'une des revendications précédentes, **caractérisé en ce qu'**un casier de rangement se trouve dans l'élément d'absorption d'énergie (30).

9. Procédé pour la fabrication de l'élément d'équipement intérieur pour un véhicule, selon l'une des revendications précédentes, dans lequel l'élément porteur (20) et l'élément absorption d'énergie (30) sont mis en forme dans une étape de procédé, **caractérisé en ce que** l'élément porteur (20) et l'élément d'absorption d'énergie (30) sont ensuite individuellement séparés.
